# EUROPÄISCHE PATENTSCHRIFT

(11) **EP 2 065 213 B1**
(45) Veröffentlichungstag und Bekanntmachung des Hinweises auf die Patenterteilung: **08.01.2014**
(21) Anmeldenummer: 08020673.3
(22) Anmeldetag: 28.11.2008
(51) Int. Cl.: B42D 15/00, B23K 26/073, B23K 26/16, B23K 26/38, B23K 26/40

(54) **Vorrichtung und Verfahren zur Herstellung eines Fensters in einem Wertdokument oder Sicherheitsdokument**
Device and method to create a window in a valuable or security document
Dispositif et procédé destinés à la fabrication d'une fenêtre dans un document de valeur ou un document sécurisé

(30) Priorität: 30.11.2007 DE 102007058169
(43) Veröffentlichungstag der Anmeldung: 03.06.2009
(73) Patentinhaber: OVD Kinegram AG, 6301 Zug (CH)
(72) Erfinder: Schilling, Andreas, 6332 Hagendorn (ZG) (CH); Tompkin, Wayne Robert, 5400 Baden (CH)
(74) Vertreter: Louis Pöhlau Lohrentz

(56) Entgegenhaltungen:
- EP-A1- 1 473 107
- EP-B2- 0 723 501
- DE-A1-102004 013 292
- DE-A1-102005 022 018

## Beschreibung

Die Erfindung betrifft eine Vorrichtung und ein Verfahren zur Herstellung eines Fensters in einem aus Papier ausgebildeten Wertdokument oder Sicherheitsdokument.

Es ist bekannt, in Wertdokumenten, wie Papierbanknoten oder dergleichen, eine oder mehrere fensterförmige Öffnungen einzubringen, die anschließend mit einer Laminierfolie abgedeckt werden, welche verschiedene visuelle Effekte in Transmission oder Reflexion beinhalten kann. Die Laminierfolie kann beispielsweise ein optisch variables Element (OVD) aufweisen, das durch das Fenster sowohl von der Vorderseite als auch von der Rückseite betrachtet werden kann.

Zur Herstellung der Öffnung in dem Wertdokument sind verschiedene Verfahren bekannt, wie beispielsweise Einbringung während der Papierherstellung, Stanzung oder Laserschneiden. Das Laserschneiden mit einem bewegten Laserstrahl hat den Vorteil, sehr genau zu sein und auch vergleichsweise komplexe Fensterformen zu ermöglichen, es hat jedoch den großen Nachteil, sehr langsam und deswegen sehr teuer zu sein.

In der EP 0 723 501 B2 wird ein Wertdokument mit Fenster beschrieben, wobei das Fenster in dem zur Herstellung des Wertdokuments dienenden fertigen Träger nachträglich erzeugt wird und sodann mit einer wenigstens bereichsweise vollständig durchsichtigen Abdeckfolie verschlossen wird, die in einer das Fenster einschließenden Vertiefung der Trägeroberfläche angeordnet ist. Das Fenster ist in einem Stanz- oder Schneidvorgang erzeugt.

in der WO 2005/095708 A2 ist ein Wertdokument mit Fenster beschrieben. Das Fenster kann während der Papierherstellung eingebracht sein, wobei der Randbereich des Fensters charakteristische Unregelmäßigkeiten aufweist, die am fertigen Papier nachträglich nicht herstellbar sind. Es ist aber auch vorgesehen, das Fenster nachträglich durch Ausstanzen oder Ausschneiden zu erzeugen, wodurch vorteilhafterweise das Fenster mit sehr geringem Aufwand erzeugt werden kann und die Fenstergröße oder -form an spezielle Bedingungen individuell angepasst werden kann.

In der DE 10 2005 022 018 A1 wird vorgeschlagen, in Sicherheitspapier mindestens zwei Fenster einzubringen, wobei das eine Fenster bereits während der Papierherstellung und das zweite Fenster in das fertige Papier durch Schneiden oder Stanzen eingebracht ist.

In der EP 1 473 107 A1 ist ein Wertdokument mit einem Fenster offenbart.

Aufgabe der vorliegenden Erfindung ist es, eine verbesserte Vorrichtung und ein verbessertes Verfahren zur Herstellung eines Fensters in einem aus Papier ausgebildeten Wertdokument oder Sicherheitsdokument anzugeben.

Erfindungsgemäß wird diese Aufgabe mit einem Laser zur Herstellung eines Fensters in einem für die Herstellung von Wert- oder Sicherheitsdokumenten, wie Banknoten, Ausweiskarten und dergleichen vorgesehenen Sicherheitspapier, gelöst, wobei vorgesehen ist, dass in dem Strahlengang zwischen dem Laser und der Oberfläche des Sicherheitspapiers ein kinoformes optisches Element angeordnet ist, das den Laserstrahl auf die Oberfläche des auf einer Schneidunterlage angeordneten Sicherheitspapiers in einem Arbeitsbereich so projiziert, insbesondere fokussiert, dass der Laserstrahl auf einen der Kontur des Fensters folgenden linienförmigen Oberflächenbereich und/oder einen von der Kontur des Fensters eingeschlossenen flächenförmigen Oberflächenbereich konzentriert ist. Die Aufgabe wird weiter mit einem Verfahren zur Herstellung eines Fensters in einem Sicherheitspapier für die Herstellung von Wert- oder Sicherheitsdokumenten, wie Banknoten, Ausweiskarten und dergleichen mittels eines durch einen Laser bereitgestellten Laserstrahls, gelöst, wobei vorgesehen ist, dass der Laserstrahl mittels eines in den Laserstrahlengang zwischen dem Laser und der Oberfläche des Sicherheitspapiers eingebrachten kinoformen optischen Elements auf einen Bereich der Oberfläche des Sicherheitspapiers so projiziert, insbesondere fokussiert wird, dass der Laserstrahl auf einen der Kontur des Fensters folgenden linienförmigen Oberflächenbereich und/oder einen von der Kontur des Fensters eingeschlossenen flächenförmigen Oberflächenbereich konzentriert wird.

Dadurch, dass ein Laserstrahl bereitgestellt wird, der auf einen der Kontur des Fensters folgenden linienförmigen Oberflächenbereich und/oder einen dem Fensterbereich entsprechenden flächenförmigen Oberflächenbereich konzentriert ist, kann das Fenster in wesentlich kürzerer Zeit als bisher aus dem Sicherheitspapier ausgeschnitten werden. Ein weiterer Vorteil des Laserstrahlschneidens, nämlich die mögliche Individualisierung des Fensterbereichs, ist nutzbar, wenn wie weiter unten beschrieben, unterschiedliche kinoforme optische Elemente in einer Wechslervorrichtung bereitgestellt werden.

Durch die Verwendung eines kinoformen optischen Elements anstelle einer herkömmlichen Linsenanordnung kann die Intensitätsverteilung des Laserstrahls besser als bisher beeinflusst werden. Ein Abfall der Intensität an Randbereichen, beispielsweise von der Mitte einer durch den Laserstrahl projizierten Linie zu deren Endpunkten, wird durch das vorgeschlagene optische Element vermieden.

Das kinoforme optische Element ist ein für den optischen Bereich dimensioniertes Kinoform. Das Kinoform ist ein Element zur Rekonstruktion einer Wellenfront. Das Kinoform wirkt nur auf die Phase einer einfallenden Wellenfront, basierend auf der Annahme, dass von einer an einem Objekt gestreuten Wellenfront nur die Phaseninformation benötigt wird, um ein Bild des streuenden Objektes zu konstruieren. Die Amplitude der Wellenfront in der Ebene des Kinoforms ist als konstant angenommen. Ebenso ist die Amplitude am Bildort konstant, wie weiter oben dargestellt. Kinoforms können grundsätzlich für jegliche physikalische Wellenform verwendet werden, beispielsweise auch für Ultraschall- oder Mikrowellen. Das kinoforme optische Element kann ein Hologramm ein dreidimensionales Bild eines Objektes erzeugen. Im Unterschied zu einem Hologramm, das durch optische Mittel erzeugbar ist, kann das kinoforme optische Element nur durch ein Computerprogramm berechnet werden. Ausgangspunkt der Berechnung ist beispielsweise der zur Ausbildung des Fensters im Sicherheitspapier geplante linienförmige oder flächenförmige Oberflächenbereich.

Das besagte kinoforme optische Element kann beispielsweise als ein Oberflächenprofil, wie weiter unten beschrieben, ausgebildet sein oder auch als Abfolge von transparenten und nichttransparenten streifenförmigen Bereichen, wobei die charakteristischen Abmessungen des Oberflächenprofils (Profiltiefe, Profilbreite und Profilfrequenz) in der Größenordnung der Wellenlänge des verwendeten Laserlichts liegen. Von besonderem Vorteil ist, dass das Oberflächenprofil bzw. das Linienmuster mittels Computerprogramm erzeugt werden kann, wobei bekannte Verfahren zur Verfügung stehen, um den berechneten Verlauf auf geeignetes Material zu übertragen. Gegenüber Phasen-Fresnel-Linsen weist das erfindungsgemäße kinoforme optische Element den Vorteil größerer Effizienz auf. Es handelt sich bei dem kinoformen optischen Element nicht um eine Phasen-Fresnel-Linse. Vielmehr ist die Phasen-Fresnel-Linse ein Vorläufer des kinoformen optischen Elements.

Unter den Begriff "Sicherheitspapier" sollen neben Papier im herkömmlichen Sinne auch Kunststofffolien oder Faserfunktionstextilien oder beliebige andere Substrate fallen, die für Wert- oder Sicherheitsdokumente eingesetzt werden.

Es kann vorteilhafterweise vorgesehen sein, dass das kinoforme optische Element ein mit in einer Oberfläche abgeformten lichtbeugenden Strukturen ausgebildetes kinoformes optisches Element ist.

Es kann auch vorgesehen sein, dass das kinoforme optische Element ein mit in einem Volumen ausgebildeten lichtbrechenden Strukturen ausgebildetes kinoformes optisches Element ist.

Weiter kann vorgesehen sein, dass der Laser ein Hochleistungslaser ist, d. h. ein Laser mit einer Dauerleistung von größer als 50 W.

In einer vorteilhaften Ausführung ist vorgesehen, dass der Laser ein gepulster Hochleistungslaser ist. Vorteilhafterweise soll der Laser eine Pulsleistung größer 0,5 kW aufweisen.

Es kann vorgesehen sein, dass der Laser ein CO₂-Laser,ein Nd:YAG-Laser oder ein Excimer-Laser ist. Der Nd:YAG-Laser hat den Vorteil hoher Leistung gepaart mit einer Laserwellenlänge, die genügend Absorption im Material gewährleistet, um zu schneiden. Der Excimer-Laser, wie beispielsweise der KrF-Laser, ist ein Kaltlichtlaser, der sehr kurze Laserimpulse im Femtosekundenbereich abstrahlt.

Es kann vorgesehen sein, dass die Schneidunterlage als plattenförmiger Körper ausgebildet ist. Es können weiter Einrichtungen vorgesehen sein, die das vorzugsweise als Papierband vorliegende Spezialpapier an die Schneidunterlage pressen, sodass eine gute Planlage des Spezialpapiers gegeben ist.

Es kann aber auch vorgesehen sein, dass die Schneidunterlage als walzenförmiger Körper ausgebildet ist. Eine walzenförmige Schneidunterlage kann Vorteile bei Einbindung der erfindungsgemäßen Schneidvorrichtung in ein Rolle-zu-Rolle-Verfahren haben oder auch vorteilhafterweise zum schrittweisen Transport des Papierbandes genutzt werden. Das Papierband kann durch Andruckrollen so auf die walzenförmige Schneidunterlage gepresst werden, dass zwischen der Oberfläche der Schneidunterlage und dem Papierband kein Schlupf auftritt. Für große Fenster und relativ kleine Radien der walzenförmigen Schneidunterlage kann vorgesehen sein, die Kinoform so auszulegen, dass die Bildebene der Krümmung der walzenförmigen Schneidunterlage angepasst ist. Es kann weiter vorgesehen sein, die walzenförmige Schnittunterlage mit einem Rastgetriebe oder mit einem Schrittmotor vorzugsweise drehstarr zu koppeln.

Es kann weiter vorgesehen sein, dass die Schneidunterlage ein Durchgangsloch oder einen perforierten Bereich aufweist, dessen Erstreckung mit dem Arbeitsbereich korrespondiert. Das Durchgangsloch oder der perforierte Bereich können vorgesehen sein, um Schnittabfall zu entfernen, beispielsweise durch Druckluft.

In einer weiteren vorteilhaften Ausbildung ist eine Absaugeinrichtung zur Absaugung des Schnittabfalls vorgesehen. Die Absaugeinrichtung kann vorteilhafterweise Mittel zur Bereitstellung von Überdruck oder Unterdruck, Mittel zum Leiten des Schnittabfalls und einen Abfallbehälter umfassen. Als Druckmedium kann vorzugsweise Luft vorgesehen sein. Zur Bereitstellung von Druckluft oder Saugluft kann beispielsweise eine Pumpe vorgesehen sein oder ein Druckanschluss einer zentralen Druckluftversorgung. Die Pumpe kann weiter so ausgelegt sein, dass sie außer Luft auch den Schnittabfall fördern kann. Es können weiter Mittel vorgesehen sein, um mittels eines unter Druck strömenden Mediums einen Unterdruck zu erzeugen. Es kann zum Beispiel ein Injektor vorgesehen sein. Dieses Prinzip ist beispielsweise bei der Wasserstrahlpumpe verwirklicht, bei der mittels strömenden Wassers ein Unterdruck erzielt werden kann. Die vollständige und sichere Entfernung des Schnittabfalls ist insbesondere für die Herstellung von Banknoten von hoher Bedeutung. Nicht entfernter Schnittabfall kann beispielsweise einen nachfolgenden Druckprozess beeinträchtigen.

Es kann weiter vorgesehen sein, dass das kinoforme brechende Element als ein in eine Schicht eines Mehrschichtkörper abgeformtes kinoformes Oberflächenprofil ausgebildet ist. Vorteilhafterweise weist der Mehrschichtkörper eine formstabile Trägerschicht auf oder er ist mit einer Kleberschicht versehen, um ihn auf einen formstabilen Träger aufzubringen. Der Mehrschichtkörper kann also auch als eine Heiß- oder Kaltprägefolie ausgebildet sein, deren Übertragungsschicht als kinoformes optisches Element ausgebildet ist. Wegen der hohen Laserleistungen würde man diese optischen Kinoform-Bauteile üblicherweise aus wärmebeständigen Materialien wie Glas, Quarzglas, Metall (Reflexion) oder dergleichen fertigen.

Es kann vorgesehen sein, dass das kinoforme Oberflächenprofil mit einer Reflexionsschicht beschichtet ist. Vorteilhafterweise kann die Reflexionsschicht als eine metallische Schicht ausgebildet sein, beispielsweise aus Gold, Silber, Aluminium oder Kupfer, oder aus einer Legierung, die mindestens eines der genannten Metalle enthält. Die Reflexionsschicht kann durch Aufdampfen oder durch Aufsputtern aufgebracht sein. Es ist auch möglich, das Oberflächenrelief des kinoformen optischen Elements in eine Metallschicht abzuformen, beispielsweise durch Diamantschneiden in eine Metallplatte, zum Beispiel eine Kupferplatte. Diese Methode ist besonders effektiv, wenn die Wellenlänge des Laserstrahls größer als 1 µm ist. Das ist beispielsweise bei dem CO₂-Laser der Fall, der Licht mit einer Wellenlänge von 10,6 µm abstrahlt. Eine metallische Kinoform ist besonders robust und kann beispielsweise mit einer Wasserkühlung versehen sein.

Gemäß einer bevorzugten Ausführungsform der Erfindung ist das kinoforme Oberflächenprofil als Grenzschicht zwischen einer niedrigbrechenden und einer hochbrechenden Schicht oder eine wechselweise Abfolge von mehreren hoch- und niedrigbrechenden Schichten ausgebildet ist, insbesondere vorzugsweise ein oder mehrere der hoch- und niedrigbrechenden Schichten von dielektrischen Schichten gebildet sind. Optisches Material mit hohem Brechungsindex wird auch als HRI-Material (HRI = **H**igh **R**efractive **I**ndex) bezeichnet. Optisches Material mit niedrigem Brechungsindex wird auch als LRI-Material (LRI = **L**ow **R**efractive **I**ndex) bezeichnet. Als HRI-Material kann beispielsweise GaAs, GaP oder BaTiO₃ vorgesehen sein. Als LRI-Material kann beispielsweise MgF₂, LiF oder AlF₃ vorgesehen sein. Die dielektrischen Schichten können sowohl als organische als auch als anorganische Schichten ausgebildet sein.

Es kann weiter vorgesehen sein, dass mindestens zwei unterschiedliche kinoforme optische Elemente auf einer Wechseleinrichtung angeordnet sind. Durch die Wechseleinrichtung können in kurzer Abfolge unterschiedliche kinoforme optische Elemente in den Laserstrahl eingebracht werden, so dass Maschinenrüstzeiten von vernachlässigbarer Dauer entstehen.

Es ist möglich, dass die Wechseleinrichtung mit einer trommelförmigen Aufnahme für die unterschiedlichen kinoformen optischen Elemente ausgebildet ist. Die trommelförmige Aufnahme kann beispielsweise durch ein Rastgetriebe oder durch einen Schrittmotor angetrieben sein. Der Schrittmotor ermöglicht eine besonders einfache und robuste Ausführung, weil er ohne Zwischenschaltung eines Getriebes mit der trommelförmigen Aufnahme verbindbar ist. Weiter ist er besonders einfach mit elektronischen Mitteln steuerbar.

Es ist aber auch möglich, dass die Wechseleinrichtung mit einer streifenförmigen oder einer plattenförmigen Aufnahme für die unterschiedlichen kinoformen optischen Elemente ausgebildet ist. Die Wechseleinrichtung kann zum Beispiel als ein Transportband ausgebildet sein.

Vorteilhafterweise kann vorgesehen sein, dass die unterschiedlichen kinoformen optischen Elemente justierbar auf der Aufnahme gelagert sind. Die Justierbarkeit kann die Anforderung an die Fertigungstoleranzen der Aufnahme deutlich reduzieren und insbesondere das problemlose Austauschen der kinoformen optischen Elemente ermöglichen.

In einer weiteren vorteilhaften Ausbildung ist vorgesehen, dass das kinoforme optische Element als ein programmierbares optisches Element ausgebildet ist. Das kinoforme optische Element kann beispielsweise als ein spatialer Lichtmodulator ausgebildet sein, der entweder transmissiv oder reflexiv ausgebildet sein kann. Es ist aber auch möglich, ein programmierbares Mikrospiegel-Array zu verwenden, wie es beispielsweise für den Einsatz in manchen Projektions-Fernsehempfängern verwendet wird.

Weitere Ansprüche sind auf das erfindungsgemäße Verfahren gerichtet.

Es kann vorgesehen sein, dass die Energiedichte des Laserstrahls in dem linienförmigen Oberflächenbereich annähernd konstant ist. Unter "annähernd konstant" wird verstanden, dass die Energiedichte um einen Mittelwert schwanken kann, vorzugsweise nicht mehr als um 10 %. Sie soll jedoch keine signifikante Verteilung aufweisen, etwa nach einer Gauß-Verteilung.

Weiter kann vorgesehen sein, dass der flächige Oberflächenbereich vorzugsweise zusammenhängende Teilbereiche aufweist, in denen die Energiedichte des Laserstrahls annähernd konstant ist. Es ist also vorgesehen , die Energie des Laserstrahls auf Teilbereiche zu konzentrieren und im Interesse einer Energieminimierung in Kauf zu nehmen, dass der flächige Oberflächenbereich nicht vollständig verdampft wird, sondern dabei ein gitterartiger Schnittabfall erzeugt wird. Es ist aber auch möglich, den flächigen Oberflächenbereich nur punktweise zu entfernen, wobei die Anordnung und/oder Ausbildung der entfernten Punkte ein Sicherheitsmerkmal bilden können bzw. kann.

Weiter kann vorgesehen sein, dass das Fenster hergestellt wird, indem nacheinander mehrere unterschiedliche kinoforme optische Elemente und/oder gleichartige kinoforme optische Elemente mit unterschiedlicher Drehlage in den Laserstrahlengang gebracht werden. Beispielsweise kann aus Quadraten mit unterschiedlicher Drehlage ein sternförmiges Fenster hergestellt werden, wobei der Drehpunkt mit dem Mittelpunkt des Quadrats zusammenfällt. Mit mehreren elliptischen Fenstern können beispielsweise blütenförmige Fenster hergestellt werden, wobei durch Wahl des Drehpunktes auch asymmetrische Fensterformen herstellbar sind. Es ist weiter möglich, auch sehr feine Ausschnitte herzustellen, beispielsweise in Form eines "Guillochen-Fensters", die mit konventioneller Technologie nur mit hohem Kostenaufwand herstellbar wären.

Es kann weiter vorgesehen sein, dass ein programmierbares optisches Element als kinoformes optisches Element verwendet wird, wobei das Oberflächenprofil durch eine Vielzahl einstellbarer optischer Elemente gebildet wird. Bei den einstellbaren optischen Elementen kann es sich beispielsweise um Mikrospiegel handeln, die durch ein Stellglied, wie etwa einen Piezoaktor, schwenkbar sind.

Die Erfindung wird nun anhand von Ausführungsbeispielen näher erläutert. Es zeigen
- Fig. 1: eine erstes Ausführungsbeispiel der erfindungsgemäßen Schneidvorrichtung in schematischer Darstellung;
- Fig. 2: ein zweites Ausführungsbeispiel der erfindungsgemäßen Schneidvorrichtung in schematischer Darstellung;
- Fig. 3: ein drittes Ausführungsbeispiel der erfindungsgemäßen Schneidvorrichtung in schematischer Darstellung;
- Fig. 4: ein viertes Ausführungsbeispiel der erfindungsgemäßen Schneidvorrichtung in schematischer Darstellung;
- Fig. 5: ein fünftes Ausführungsbeispiel der erfindungsgemäßen Schneidvorrichtung in schematischer Darstellung;
- Fig. 6: eine Schnittansicht einer ersten Ausführungsvariante des kinoformen optischen Elements in Fig. 1 und 2;
- Fig. 7: eine Schnittansicht einer zweiten Ausführungsvariante des kinoformen optischen Elements in Fig. 1 und 2;
- Fig. 8: Ausführungsbeispiele a) bis f) eines mit der erfindungsgemäßen Schneidvorrichtung herstellbaren Fensters;
- Fig. 9: ein weiteres Ausführungsbeispiel eines mit der erfindungsgemäßen Schneidvorrichtung herstellbaren Fensters.

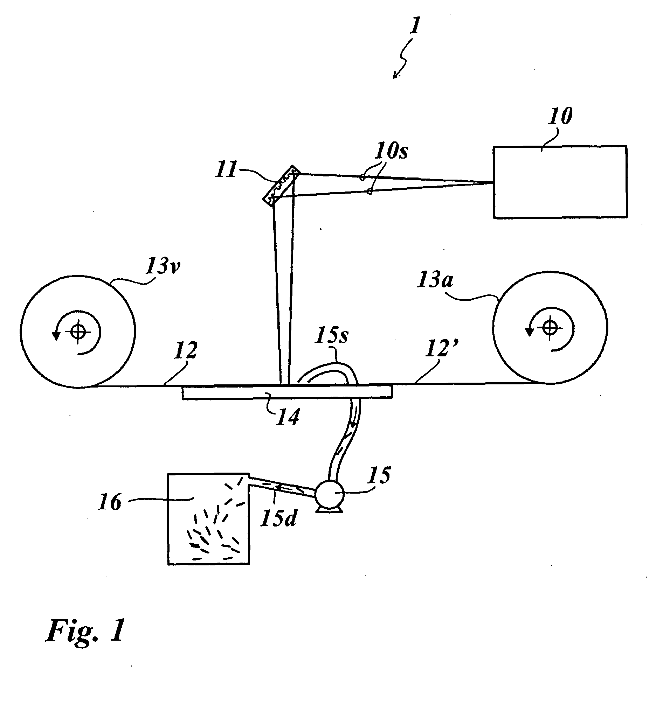

Fig. 1 zeigt eine Schneidvorrichtung 1 mit einem Laser 10. Bei dem Laser handelt es sich um einen Hochleistungslaser, beispielsweise einen CO₂-Laser, einen Excimer-Laser, zum Beispiel KrF-Laser, oder einen Nd:YAG-Laser. Vom Laser 10 ausgesandte Laserstrahlen 10s treffen auf ein kinoformes optisches Element 11, von dem sie auf ein Papierband 12 gelenkt werden. Das kinoforme optische Element 11 formt aus dem vom Laser ausgesandten kohärenten Licht ein Bild eines computergenerierten Objektes, das dem Schnittverlauf entspricht. Dabei konzentriert das kinoforme optische Element die gesamte Strahlungsenergie in den Schnittverlauf, so dass die Laserenergie optimal genutzt wird. Es treten also nicht die bei herkömmlichen Anordnungen auftretenden Verluste durch Blenden, insbesondere Lochblenden, Linsen und Spiegel auf. Weiter weist der Laserstrahl entlang des Schnittverlaufs eine annähernd konstante Energiedichte auf. Das Papierband 12 ist auf einer Vorratstrommel 13v bereitgestellt und wird nach der Laserbearbeitung als bearbeitetes Papierband 12' auf eine Aufwickeltrommel 13a aufgewickelt. Das Papierband 12 wird schrittweise transportiert, d. h. es befindet sich während des Bearbeitungsschritts in Ruhe. Das Papierband 12 besteht aus einem für Wert- oder Sicherheitsdokumente, wie Banknoten, Ausweiskarten und dergleichen geeigneten Sicherheitspapier. Das Papierband 12 ist über eine plattenförmige Schneidunterlage 14 geführt, wobei in Fig. 1 nicht dargestellte Elemente zum Andruck und zur Planlage des Papierbandes 12 vorgesehen sein können.

Bei dem kinoformen optischen Element 11 handelt es sich um ein auch als Kinoform bekanntes optisches Bauelement. Der Begriff "Kinoform" bezieht sich in der Regel auf ein reines Phasenelement mit beliebiger optischer Funktion. Bei der gelegentlich auch diesem Prinzip zugeordneten Zonenplatte handelt es sich in der Regel um eine Amplituden-Fresnel-Linse. Die Zonen des kinoformen optischen Elements unterscheiden sich in ihrer Transparenz oder/und in ihrer optischen Weglänge. Im einen Fall wird die Strahlung an ringförmigen Spalten gebeugt und durch konstruktive Interferenz in Brennpunkten verstärkt. Im anderen Fall werden Zonen unterschiedlicher Dicke verwendet, die eine Phasenverschiebung der Lichtwelle von 180 Grad bewirken, wodurch die transmittierte Strahlung dieser Zonen im Brennpunkt ebenfalls konstruktiv interferieren kann. Im Gegensatz zu klassischen Linsen kann auch die Intensitätsverteilung der in der Brennebene fokussierten Laserstrahlung beeinflusst werden, sodass beispielsweise der Laserstrahl auf einer geschlossenen Linie mit gleichmäßiger Intensität konzentriert werden kann.

Das kinoforme optische Element 11 ist so ausgebildet, dass es die Laserstrahlen 10s auf der Oberfläche des Papierbands 12 in einem Arbeitsbereich des Lasers zu einer geschlossenen Linie fokussiert, die eine Umrisslinie eines in das Papierband einzubringenden Fensters bildet. So ist nach dem Durchtrennen des Papierbands 12 entlang der Umrisslinie ein von dem Papierband getrennter Bandbereich ausgebildet, der sodann durch eine Absaugeinrichtung entfernt wird. Die Absaugeinrichtung weist in dem in Fig. 1 dargestellten Ausführungsbeispiel eine Pumpe 15 auf, die am Saugstutzen mit einer Saugleitung 15s und am Druckstutzen mit einer Druckleitung 15d verbunden ist. Die Eintrittsöffnung der Saugleitung 15s ist stromabwärts hinter dem Arbeitsbereich des Lasers 10 über dem bearbeiteten Papierband 12' angeordnet. Die Druckleitung 15d mündet in einem Abfallbehälter 16.

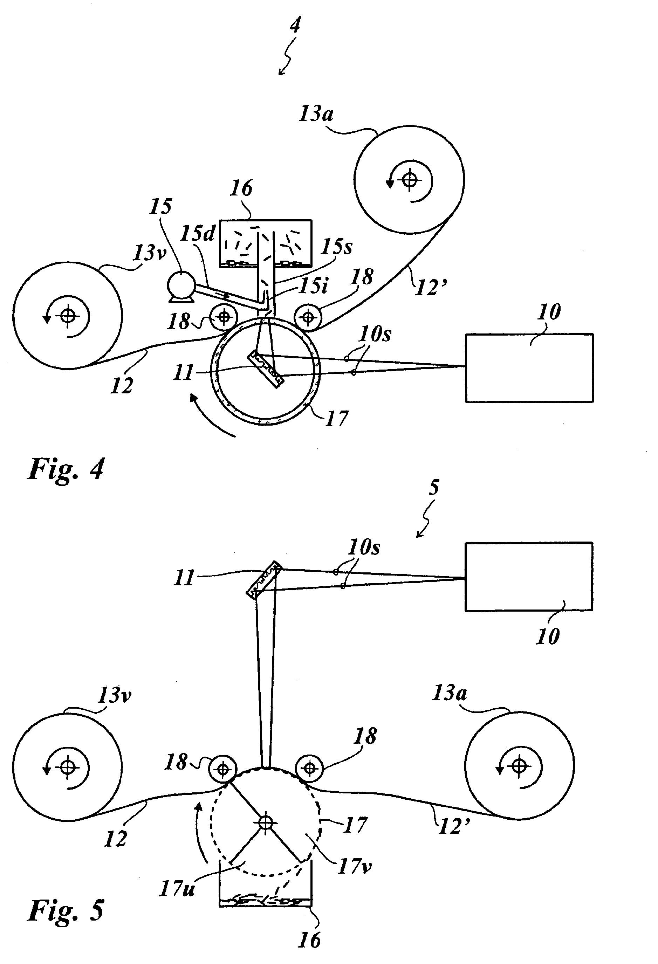

Es ist auch möglich, die Schneidunterlage 14 als eine Vakuumplatte auszubilden, so dass das Papierband 12 ohne weitere Hilfsmittel durch das angelegte Vakuum auf die Schneidunterlage 14 gepresst ist. Nach dem Ausschneiden des Fensters kann die Schneidunterlage 14 mit Überdruck beaufschlagt werden und der Schnittabfall von dem Papierband 12' fort geblasen werden, wie auch weiter unten in Fig. 5 beschrieben.

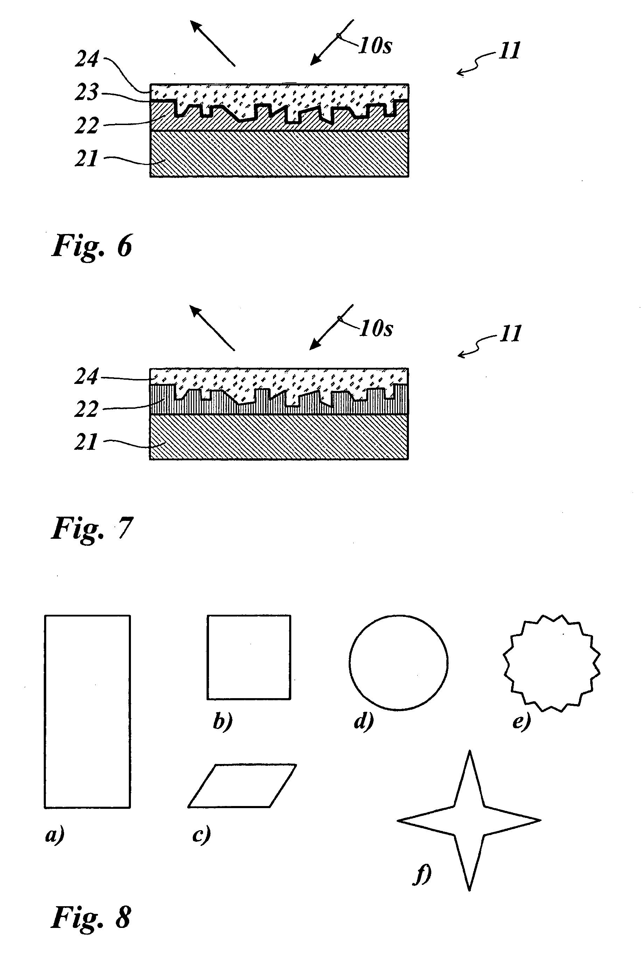

Fig. 8 zeigt beispielhaft, welche unterschiedlich geformten Arbeitsbereiche (a bis f) durch den linienförmig fokussierten Laserstrahl 10s des Lasers 10 gebildet werden können bzw. welche unterschiedlichen Fenster aus dem Papierband 12 ausgeschnitten werden können.

Es ist aber auch möglich, Brennpunkte bzw. Brennflächen innerhalb des durch die Umrisslinie eingeschlossenen Arbeitsbereichs vorzusehen, sodass das Fenster im Papierband 12 vollständig ausgebrannt wird. Mehrere Brennpunkte können eine Brennebene bilden, indem sie beispielsweise in einem feinen Raster angeordnet sein und sich vorteilhafterweise überlappen, sodass das Papier im Arbeitsbereich vollständig entfernt wird. In diesem Fall muss jedoch eine höhere Laserleistung bereitgestellt werden als zum Heraustrennen der Umrisslinie. Anstelle des Papierbandes 12 kann auch eine metallisierte transparente Folie zur Bearbeitung vorgesehen sein, wobei die in dem Fensterbereich angeordnete Metallisierung durch den Laserstrahl entfernt werden kann.

Der Laser 11 kann außerdem weitere Operationen durchführen. Er kann beispielsweise genutzt werden, um Farbaufträge oder Folien, die vor der Laserbearbeitung auf die Papieroberfläche aufgebracht worden sind, zu verändern. Der Laser 11 kann zum Beispiel verwendet werden zur Demetallisierung von Folienabschnitten, die auf diese Weise im Register mit dem Fenster liegen und ein zusätzliches Sicherheitsmerkmal bilden können. Weiter kann der Laser 11 vorgesehen sein, um in einem benachbarten Bereich des Fensters nur eine Schicht des Papierbandes 12 abzutragen, beispielsweise in einem Tiefenbereich von 10 bis 40 µm. Auf diese Weise kann beispielsweise ein Graustufenbild im Register zu dem Fenster eingebracht werden, das den optischen Effekt eines Wasserzeichens zeigt und nur sehr schwer nachzuahmen ist.

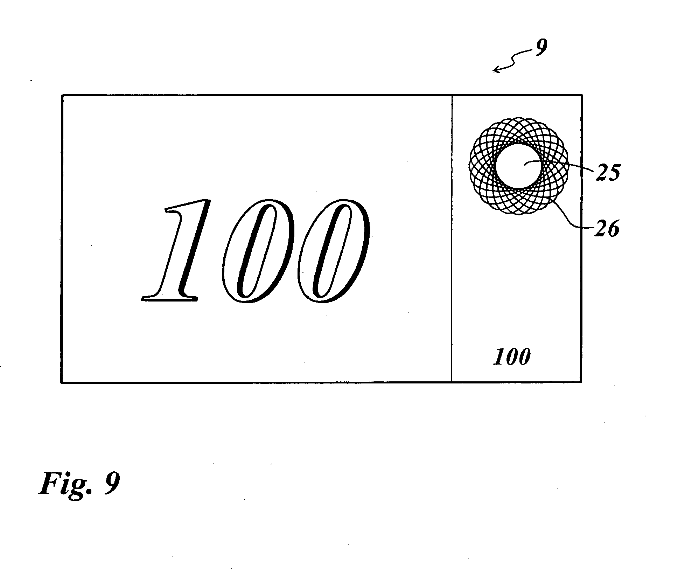

Fig. 9 zeigt eine Banknote 9, die neben einem Fenster 25, in dem das Papier bzw. das Trägersubstrat der Banknote 9 vollständig entfernt ist, einen Guillochen-Bereich 26, in dem das Papier bzw. Trägersubstrat der Banknote 9 nur in feinen Linienbereichen entfernt ist. Dabei kann vorgesehen sein, die Schnittpunkte von Linien nicht zu entfernen, so dass vollständig von Linien umschlossene Inselbereiche vermieden werden. Auf diese Weise wird das "Ausstanzen" der Inselbereiche vermieden. Es kann aber auch vorgesehen sein, die Inselbereiche zu entfernen und die feinen Linien zu belassen, die beispielsweise durch eine vorder- und/oder rückseitig das Fenster überdeckende transparente Folie oder dergleichen stabilisiert sein können.

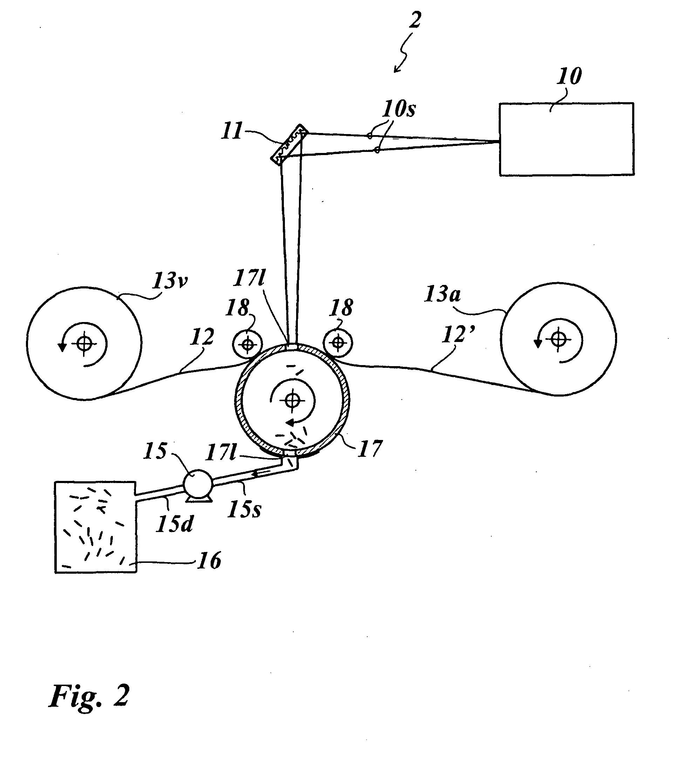

Fig. 2 zeigt nun ein zweites Ausführungsbeispiel der erfindungsgemäßen Schneidvorrichtung. Eine Schneidvorrichtung 2 weist nun als Schneidunterlage zur Lagefixierung des Papierbandes 12 eine Hohlwalze 17 auf. Zwei am Umfang der Hohlwalze 17 angeordnete Andruckwalzen 18 pressen das Papierband 12 auf die Oberfläche der Hohlwalze 17 und sorgen so für eine definierte Lage des Papierbands 12 in der Brennebene des Laserstrahls 10s. Die Hohlwalze 17 weist am Umfang zwei einander gegenüberstehende Durchgangslöcher 171 auf. Die Durchgangslöcher 17I sind vorgesehen, um den durch den Laserstrahl 10s ausgeschnittenen Papierabfall entfernen zu können. Der Außendurchmesser der Hohlwalze 17 ist so gewählt, dass der Abstand der Mittelpunkte der Durchgangslöcher 171 auf dem Umfang der Hohlwalze dem Abstand der auszuschneidenden Fenster auf dem Papierband 12 entspricht. Im Bearbeitungsschritt ist jeweils das eine Durchgangsloch 171 unter dem Arbeitsbereich positioniert und das andere Durchgangsloch 171 über der Eintrittsöffnung der Saugleitung 15s der Absaugeinrichtung. Die Absaugeinrichtung ist wie die weiter oben in Fig. 1 beschriebene Absaugeinrichtung mit Pumpe 15, Saugleitung 15s, Druckleitung 15d und Abfallbehälter 16 ausgebildet. auf, Die Eintrittsöffnung der Saugleitung 15s gleitet unter Zwischenschaltung einer geeigneten Dichtung im Bereich der Durchgangslöcher 17I auf der Außenwand der Hohlwalze 17. Die Absaugeinrichtung erzeugt immer dann in der Hohlwalze einen Unterdruck, wenn eines der Durchgangslöcher 171 der Eintrittsöffnung gegenübersteht, sodass in der Hohlwalze 17 angesammelter Papierabfall abgesaugt wird.

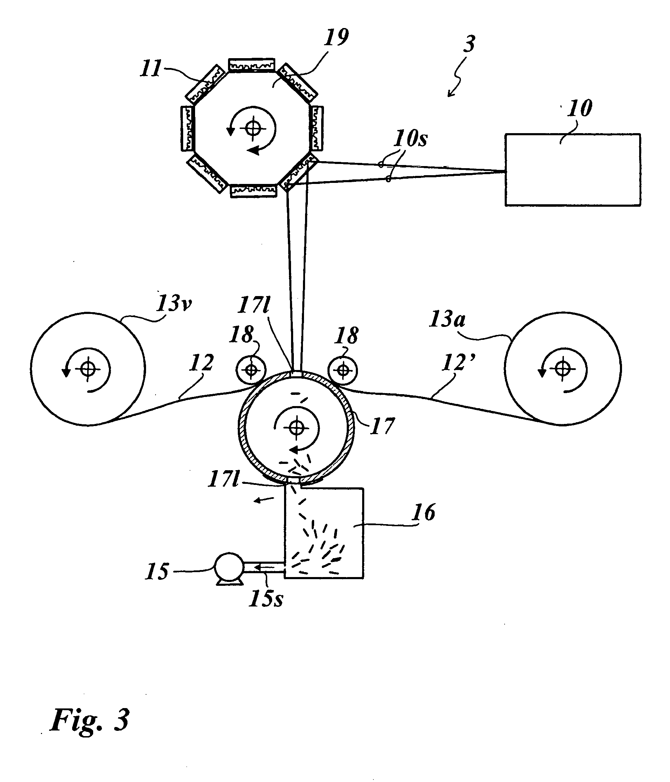

Fig. 3 zeigt ein drittes Ausführungsbeispiel der erfindungsgemäßen Schneidvorrichtung. Eine Schneidvorrichtung 3, die im Wesentlichen wie die in Fig. 2 beschriebene Schneideinrichtung 2 aufgebaut ist, weist neben einer modifizierten Ansaugeinrichtung eine achteckige Revolverwalze 19 auf, auf deren Umfang acht unterschiedliche kinoforme optische Elemente 11 angeordnet sind. Die Revolverwalze 19 kann acht Raststellungen einnehmen, in der jeweils eines der acht kinoformen optischen Elemente 11 in den Strahlengang des Lasers 10 gebracht ist. Die Anzahl n der möglichen unterschiedlichen kinoformen optischen Elemente 11 ist lediglich durch den konstruktiven Aufbau begrenzt, insbesondere durch den maximalen Durchmesser und/oder durch die Abmessungen des kinoformen optischen Elements 11. Anstelle einer rastenden Revolverwalze 19 kann auch eine durch einen Schrittmotor angetriebene Revolverwalze vorgesehen sein, wobei die Abtriebswelle des Schrittmotors drehstarr mit der Revolverwalze verbunden sein kann. Weiter kann vorgesehen sein, dass die kinoformen optischen Elemente 11 jeweils auf einer justierbaren Aufnahme angeordnet sind, sodass jedes der kinoformen optischen Elemente 11 unabhängig von den anderen Elementen einstellbar ist. Es ist auch möglich, dass in jedem Bearbeitungsschritt mehrere unterschiedliche kinoforme optische Elemente 11 in den Strahlengang des Lasers 11 geschwenkt werden, um eines oder mehrere Fenster in dem Papierband 12 auszuschneiden. Es kann weiter vorgesehen sein, die auf der Oberfläche der Revolverwalze 19 angeordneten unterschiedlichen kinoformen optischen Elemente 11 als ein Baukastensystem auszubilden. So kann beispielsweise das sternförmige Fenster e) in Fig. 7 durch Kombination aus quadratischen Fenstern mit unterschiedlicher Drehlage gebildet sein.

An Stelle der Revolverwalze 19 kann auch ein programmierbares optisches Element vorgesehen sein. Das programmierbare optische Element kann beispielsweise als ein spatialer Lichtmodulator ausgebildet sein, der entweder transmissiv oder reflexiv ausgeführt sein kann. Es ist aber auch möglich, ein programmierbares Mikrospiegel-Array zu verwenden, wie es beispielsweise für den Einsatz in manchen Projektions-Fernsehempfängern verwendet wird.

Die Absaugeinrichtung weist den Aufbau der in Fig. 2 beschriebenen Absaugeinrichtung auf, mit dem Unterschied, dass nunmehr die Eintrittsöffnung des Abfallbehälters 16 mit den Durchgangslöchern 171 in der Hohlwalze 17 zusammenwirkt und die Pumpe 15 über die Saugleitung 15s mit dem Abfallbehälter 16 verbunden ist. Die Eingangsöffnung der Saugleitung 15s kann mit einem Filter oder mit einer perforierten Platte verschlossen sein, um den Eintritt von Papierabfall in die Saugleitung zu verhindern.

Fig. 4 zeigt nun eine Schneidvorrichtung 4, bei der die Hohlwalze 17 aus einem transparenten Material ausgebildet ist. Der Laser 10 ist nun seitlich von der Hohlwalze 17 so angeordnet, dass der Laserstrahl 10s auf das im Innern der Hohlwalze 17 angeordnete kinoforme optische Element 11 trifft, das den Laserstrahl 10s auf den Arbeitsbereich auf der Oberfläche der Hohlwalze 17 fokussiert. Das Papierband 12 ist wie in Fig. 2 und 3 beschrieben, durch die Andruckwalzen 18 mindestens im Arbeitsbereich auf die Oberfläche der Hohlwalze 17 gedrückt.

Die Absaugeinrichtung ist nun über dem Papierband 12 angeordnet. Die Eintrittsöffnung der Saugleitung 15s ist im Arbeitsbereich über dem Papierband 12 angeordnet und weist im Innern eine Injektordüse 15i auf, die mit der von der Pumpe 15 ausgehenden Druckleitung 15d verbunden ist. Auf diese Weise wird stromaufwärts vor der Injektordüse ein Unterdruck ausgebildet, der den Papierabfall vom Arbeitsbereich absaugt.

Fig. 5 zeigt nun eine Schneidvorrichtung 5, die wie die in Fig. 2 weiter oben beschriebene Schneidvorrichtung 2 ausgebildet ist, mit dem Unterschied, dass die Absaugeinrichtung für den Papierabfall nach einem anderen Prinzip arbeitet.

Die Hohlwalze 17 ist in einem mit dem Arbeitsbereich der Schneidvorrichtung korrespondierenden Umfangsbereich mit einer Vielzahl kleiner Löcher perforiert und weist im Innern eine Vakuumkammer 17v und eine Überdruckkammer 17u auf. Von Vorteil ist, dass die besagten Löcher der Perforation nicht im Register zu dem Arbeitsbereich angeordnet sein müssen. Die Vakuumkammer 17v ist unter dem Arbeitsbereich und die Überdruckkammer 17u ist über dem Abfallbehälter (16) angeordnet. Die Vakuumkammer 17v und die Überdruckkammer 17u können in radialer Erstreckung eine gemeinsame Wand aufweisen, die eine Trennwand zwischen beiden Kammern bildet, wie in Fig. 5 dargestellt. Der Papierabfall wird zunächst im Bereich der Vakuumkammer 17v an die Außenwand der Hohlwalze 17 gepresst und sodann im Bereich der Überdruckkammer 17u von der Außenwand der Hohlwalze 17 in den unter der Hohlwalze 17 angeordneten Abfallbehälter 16 geblasen.

Bei den in Fig. 1 bis 5 dargestellten Ausführungsbeispielen der Schneidvorrichtung können im Strahlengang vor oder hinter dem kinoformen optischen Element 11 zusätzlich konventionelle optische Elemente, wie Linsen, angeordnet sein.

Die Fig. 6 und 7 zeigen nun schematisch zwei Ausbildungsvarianten des kinoformen optischen Elements 11. Das kinoforme optische Element 11 ist als ein Mehrschichtkörper ausgebildet, der eine Trägerschicht 21, eine Replizierschicht 22 und eine transparente Schutzschicht 24 aufweist, sowie in dem in Fig. 6 dargestellten Ausführungsbeispiel weiter eine Reflexionsschicht 23, die auf der der Schutzschicht 24 zugewandeten Seite der Replizierschicht 22 angeordnet ist. Die Reflexionsschicht 23 kann beispielsweise eine aufgedampfte metallische Schicht sein, zum Beispiel aus Gold, Silber, Aluminium oder Kupfer oder aus einer Metalllegierung, vorzugsweise aus einer Legierung, die mindestens eines der vorgenannten Metalle enthält. Es kann auch vorgesehen sein, auf die Schutzschicht 24 zu verzichten, insbesondere, wenn sehr langwelliges Laserlicht und/oder Laserlicht hoher Leistung verwendet wird. Das kinoforme optische Element 11 kann auch aus Bulkmaterial gefertigt sein, was für die Einsatzdauer bei hohen Laserleistungen vorteilhaft sein kann.

Typische Herstellungsmethoden für Kinoforms mit Oberflächenrelief sind Elektronenstrahl-Schreiben, Laser-Schreiben oder Diamant-Schneiden.

Es kann aber auch vorgesehen sein, die Replizierschicht 22 und die Schutzschicht 24 als transparente Schichten mit so unterschiedlichen Brechzahlen auszubilden, dass an der Grenzschicht zwischen den beiden Schichten 22, 24 Totalreflexion eintritt. Vorzugsweise kann die Schutzschicht die Brechzahl von Luft aufweisen und die Replizierschicht aus einem HRI-Material (HRI = **H**igh **R**efractive **I**ndex) ausgebildet sein.

Die der Schutzschicht 24 zugewandte Seite der Replizierschicht 22 weist ein Oberflächenprofil auf, welches die optische Wirkung des kinoformen optischen Elements hervorruft, bei dem es sich hier um ein beugendes kinoformes optisches Element handelt. Das Oberflächenprofil weist Erhebungen und/oder Vertiefungen auf, deren charakteristische Abmessungen (Profiltiefe, Profilbreite, Profilfrequenz) im Bereich der Wellenlänge des vom Laser 10 abgestrahlten Lichtes liegen. Vorzugsweise ist vorgesehen, das Oberflächenprofil, das im Falle einer punktförmigen Abbildung aus konzentrischen Kreisen besteht, mit einem Computerprogramm zu berechnen. Es ist aber auch möglich, das Oberflächenprofil durch einen experimentellen Aufbau zu generieren und beispielsweise in einer fotografischen Emulsion zu fixieren. Der Aufbau des kinoformen optischen Elements 11 ist daher nicht auf die in Fig. 6 und 7 beschriebenen Ausführungen beschränkt.

## Patentansprüche

1. Schneidvorrichtung mit einem Laser zur Herstellung eines Fensters in einem für die Herstellung von Wert- oder Sicherheitsdokumenten, wie Banknoten, Ausweiskarten und dergleichen vorgesehenen Sicherheitspapier,
**dadurch gekennzeichnet,**
**dass** in dem Strahlengang zwischen dem Laser (10) und der Oberfläche des Sicherheitspapiers (12) ein kinoformes optisches Element (11) angeordnet ist, das den Laserstrahl (10s) auf die Oberfläche des auf einer Schneidunterlage (14, 17) angeordneten Sicherheitspapiers in einem Arbeitsbereich so projiziert, dass der Laserstrahl (10s) auf einen der Kontur des Fensters folgenden linienförmigen Oberflächenbereich und/oder einen von der Kontur des Fensters eingeschlossenen flächenförmigen Oberflächenbereich konzentriert ist.

2. Schneidvorrichtung nach Anspruch 1,
**dadurch gekennzeichnet,**
**dass** das kinoforme optische Element (11) ein mit in einer Oberfläche abgeformten lichtbeugenden Strukturen ausgebildetes kinoformes optisches Element ist.

3. Schneidvorrichtung nach Anspruch 1,
**dadurch gekennzeichnet,**
**dass** das kinoforme optische Element (11) ein mit in einem Volumen ausgebildeten lichtbrechenden Strukturen ausgebildetes kinoformes optisches Element ist.

4. Schneidvorrichtung nach einem der vorangehenden Ansprüche,
**dadurch gekennzeichnet,**
**dass** die Schneidunterlage (17) als walzenförmiger Körper ausgebildet ist.

5. Schneidvorrichtung nach Anspruch 4,
**dadurch gekennzeichnet,**
**dass** die Schneidunterlage (14, 17) ein Durchgangsloch oder einen perforierten Bereich aufweist, dessen Erstreckung mit dem Arbeitsbereich korrespondiert.

6. Schneidvorrichtung nach Anspruch 5,
**dadurch gekennzeichnet,**
**dass** eine Absaugeinrichtung zur Absaugung des Schnittabfalls vorgesehen ist.

7. Schneidvorrichtung nach Anspruch 4 oder 6,
**dadurch gekennzeichnet,**
**dass** die Schneidunterlage (17) als Hohlwalze mit perforierter Mantelfläche ausgebildet ist, dass im Innenraum der Hohlwalze drehfest eine Vakuumkammer (17v) und eine Überdruckkammer (17u) angeordnet sind, die mit der perforierten Mantelfläche in Verbindung stehen, und dass die Vakuumkammer (17v) unter dem Arbeitsbereich und die Überdruckkammer (17u) über einem Abfallbehälter (16) angeordnet ist.

8. Schneidvorrichtung nach Anspruch 2,
**dadurch gekennzeichnet,**
**dass** das kinoforme brechende Element (11) als ein in eine Schicht eines Mehrschichtkörper abgeformtes kinoformes Oberflächenprofil ausgebildet ist.

9. Schneidvorrichtung nach Anspruch 8,
**dadurch gekennzeichnet,**
**dass** das kinoforme Oberflächenprofil mit einer Reflexionsschicht beschichtet ist.

10. Schneidvorrichtung nach Anspruch 8,
**dadurch gekennzeichnet,**
**dass** das kinoforme Oberflächenprofil als Grenzschicht zwischen einer niedrigbrechenden und einer hochbrechenden Schicht oder eine wechselweise Abfolge von mehreren hoch- und niedrigbrechenden Schichten ausgebildet ist, insbesondere vorzugsweise ein oder mehrere der hoch- und niedrigbrechenden Schichten von dielektrischen Schichten gebildet sind.

11. Schneidvorrichtung nach einem der vorangehenden Ansprüche,
**dadurch gekennzeichnet,**
**dass** mindestens zwei unterschiedliche kinoforme optische Elemente auf einer Wechseleinrichtung (19) angeordnet sind.

12. Schneidvorrichtung nach Anspruch 11,
**dadurch gekennzeichnet,**
**dass** die Wechseleinrichtung (19) mit einer trommelförmigen Aufnahme für die unterschiedlichen kinoformen optischen Elemente ausgebildet ist.

13. Schneidvorrichtung nach einem der Ansprüche 1 bis 10,
**dadurch gekennzeichnet,**
**dass** das kinoforme optische Element als ein programmierbares optisches Element ausgebildet ist.

14. Verfahren zur Herstellung eines Fensters in einem Sicherheitspapier für die Herstellung von Wert- oder Sicherheitsdokumenten, wie Banknoten, Ausweiskarten und dergleichen mittels eines durch einen Laser bereitgestellten Laserstrahls,
**dadurch gekennzeichnet,**
**dass** der Laserstrahl (10s) mittels eines in den Laserstrahlengang zwischen dem Laser (10) und der Oberfläche des Sicherheitspapiers (12) eingebrachten kinoformen optischen Elements (11) auf einen Bereich der Oberfläche des Sicherheitspapiers (129 so projiziert wird, dass der Laserstrahl (10s) auf einen der Kontur des Fensters folgenden linienförmigen Oberflächenbereich und/oder einen von der Kontur des Fensters eingeschlossenen flächenförmigen Oberflächenbereich konzentriert wird.

15. Verfahren nach Anspruch 14,
**dadurch gekennzeichnet,**
**dass** das Fenster hergestellt wird, indem nacheinander mehrere unterschiedliche kinoforme optische Elemente (11) und/oder gleichartige kinoforme optische Elemente (11) mit unterschiedlicher Drehlage in den Laserstrahlengang gebracht werden.

## Claims

1. Cutting device having a laser for the production of a window in a security paper provided for the production of valuable or security documents, such as bank notes, identification cards and similar,
**characterised in that**,
a kinoform optical element (11) is arranged in the beam path between the laser (10) and the surface of the security paper (12), said kinoform optical element (11) projecting the laser beam (10s) onto the surface of the security paper arranged on a cutting surface (14, 17) in a work area, such that the laser beam (10s) is concentrated onto a line-shaped surface region that follows the edge of the window and/or a planar surface region enclosed by the edge of the window.

2. Cutting device according to claim 1,
**characterised in that**,
the kinoform optical element (11) is a kinoform optical element formed with diffractive structures, which are moulded on a surface.

3. Cutting device according to claim 1,
**characterised in that**,
the kinoform optical element (11) is a kinoform optical element formed with diffractive structures, which are formed in a volume.

4. Cutting device according to one of the preceding claims,
**characterised in that**,
the cutting surface (17) is formed as a cylindrical body.

5. Cutting device according to claim 4,
**characterised in that**,
the cutting surface (14, 17) has a through hole or a perforated region, the extension of which corresponds to the work area.

6. Cutting device according to claim 5,
**characterised in that**,
an extraction device for the extraction of the waste cuttings is provided.

7. Cutting device according to claim 4 or 6,
**characterised in that**,
the cutting surface (17) is formed as a hollow cylinder with a perforated outer surface, that a vacuum chamber (17v) and a hyperbaric chamber (17u) are arranged in a non-rotatable manner in the interior of the hollow cylinder, said chambers being connected to the perforated outer surface, and that the vacuum chamber (17v) is arranged under the work area and the hyperbaric chamber (17u) is arranged over a waste container (16).

8. Cutting device according to claim 2,
**characterised in that**,
the kinoform refractive element (11) is formed as a kinoform surface profile, moulded into a layer of a multi-layered body.

9. Cutting device according to claim 8,
**characterised in that**,
the kinoform surface profile is coated with a reflective layer.

10. Cutting device according to claim 8,
**characterised in that**,
the kinoform surface profile is formed as a boundary layer between a low-refractive layer and a high-refractive layer or an alternating sequence of several high and low-refractive layers; in particular preferably one or several of the high and low-refractive layers are formed from dielectric layers.

11. Cutting device according to one of the preceding claims,
**characterised in that**,
at least two different kinoform optical elements are arranged on a changing mechanism (19).

12. Cutting device according to claim 11,
**characterised in that**,
the changing mechanism (19) is formed with a drum-shaped receiver for the different kinoform optical elements.

13. Cutting device according to one of claims 1 to 10,
**characterised in that**,
the kinoform optical element is formed as a programmable optical element.

14. Method for the production a window in a security paper for the production of valuable or security documents, such as bank notes, identity cards and similar by means of a laser beam provided by a laser,
**characterised in that**,
the laser beam (10s) is projected onto a region of the surface of the security paper (12) by means of a kinoform optical element (11), which is introduced into the laser beam path between the laser (10) and the surface of the security paper (12), such that the laser beam (10s) is concentrated onto a line-shaped surface region following the edge of the window and/or a planar surface region which is enclosed by the edge of the window.

15. Method according to claim 14,
**characterised in that**,
the window is produced by several different kinoform optical elements (11) and/or similar kinoform optical elements (11) having different rotary orientations being brought into the laser beam path one after the other.

## Revendications

1. Dispositif de découpe au laser servant à fabriquer une fenêtre dans un papier de sécurité prévu pour la fabrication de documents de valeur ou de documents sécurisés, tels que des billets de banque, des cartes d'identité et similaires,
**caractérisé en ce que** :
un élément optique kinoforme (11) est disposé sur le trajet des rayons entre le laser (10) et la surface du papier de sécurité (12), lequel élément optique kinoforme projette le rayon laser (10s) dans une zone de travail, sur la surface du papier de sécurité disposé sur un support de découpe (14, 17) de telle manière que le rayon laser (10s) est concentré sur une zone de surface de forme linéaire suivant le contour de la fenêtre et/ou sur une zone de surface de forme plane enfermée par le contour de la fenêtre.

2. Dispositif de découpe selon la revendication 1,
**caractérisé en ce que** :
l'élément optique kinoforme (11) est un élément optique kinoforme réalisé avec des structures de diffraction de la lumière formées dans une surface.

3. Dispositif de découpe selon la revendication 1,
**caractérisé en ce que** :
l'élément optique kinoforme (11) est un élément optique kinoforme réalisé avec des structures de réfraction de la lumière réalisées dans un volume.

4. Dispositif de découpe selon l'une quelconque des revendications précédentes,
**caractérisé en ce que** :
le support de découpe (17) est réalisé sous la forme d'un corps présentant une forme de cylindre.

5. Dispositif de découpe selon la revendication 4,
**caractérisé en ce que** :
le support de découpe (14, 17) présente un trou de passage ou une zone perforée, dont l'étendue correspond à la zone de travail.

6. Dispositif de découpe selon la revendication 5,
**caractérisé en ce que** :
un système d'aspiration est prévu pour aspirer les déchets de coupe.

7. Dispositif de découpe selon la revendication 4 ou 6,
**caractérisé en ce que** :
le support de découpe (17) est réalisé sous la forme d'un cylindre creux pourvu d'une enveloppe extérieure perforée, **en ce qu'**une chambre à vide (17v) et une chambre à surpression (17u) sont disposées de manière solidaire en rotation dans l'espace intérieur du cylindre creux, lesquelles sont reliées à l'enveloppe extérieure perforée, et **en ce que** la chambre à vide (17v) est disposée sous la zone de travail et la chambre à surpression (17u) est disposée au-dessus d'un contenant à déchets (16).

8. Dispositif de découpe selon la revendication 2,
**caractérisé en ce que** :
l'élément de réfraction kinoforme (11) est réalisé sous la forme d'un profilé de surface kinoforme formé dans une couche d'un corps à plusieurs couches.

9. Dispositif de découpe selon la revendication 8,
**caractérisé en ce que** :
le profilé de surface kinoforme est recouvert d'une couche réflectrice.

10. Dispositif de découpe selon la revendication 8,
**caractérisé en ce que** :
le profilé de surface kinoforme est réalisé sous la forme d'une couche limite entre une couche à indice de réfraction bas et une couche à indice de réfraction élevé ou sous la forme d'une succession par alternance de plusieurs couches à indice de réfraction élevé et à indice de réfraction bas, en particulier de préférence sous la forme d'une ou de plusieurs couches à indice de réfraction bas et à indice de réfraction élevé de couches diélectriques.

11. Dispositif de découpe selon l'une quelconque des revendications précédentes,
**caractérisé en ce que** :
au moins deux éléments optiques kinoformes différents sont disposés sur un système de remplacement (19).

12. Dispositif de découpe selon la revendication 11,
**caractérisé en ce que** :
le système de remplacement (19) est réalisé avec un logement présentant une forme de tambour, destiné aux différents éléments optiques kinoformes.

13. Dispositif de découpe selon l'une quelconque des revendications 1 à 10,
**caractérisé en ce que** :
l'élément optique kinoforme est réalisé sous la forme d'un élément optique programmable.

14. Procédé servant à fabriquer une fenêtre dans un papier de sécurité pour la fabrication de documents de valeur ou de documents sécurisés, tels que des billets de banque, des cartes de crédit et similaires, au moyen d'un rayon laser fourni par un laser,
**caractérisé en ce que** :
le rayon laser (10s) est projeté au moyen d'un élément optique kinoforme (11) installé sur le trajet des rayons laser, entre le laser (10) et la surface du papier de sécurité (12), sur une zone de la surface du papier de sécurité (12), de telle manière que le rayon laser (10s) est concentré sur une zone de surface de forme linéaire, suivant le contour de la fenêtre et/ou sur une zone de surface de forme plane, entourée par le contour de la fenêtre.

15. Procédé selon la revendication 14,
**caractérisé en ce que** :
la fenêtre est fabriquée **en ce que** plusieurs divers éléments optiques kinoformes (11) et/ou des éléments optiques kinoformes (11) de même type présentant une position de rotation différente sont posés sur le trajet des rayons laser les uns après les autres.
